# EUROPÄISCHE PATENTANMELDUNG

(11) **EP 0 875 326 A2**
(43) Veröffentlichungstag der Anmeldung: **04.11.1998**
(21) Anmeldenummer: 98107730.8
(22) Anmeldetag: 28.04.1998
(51) Int. Cl.: B23D 61/02

(54) **Sägewerkzeug mit stumpfwinkligen Sägezahnflanken**

(30) Priorität: 28.04.1997 DE 29707665 U
(71) Anmelder: Ake Knebel GmbH & Co., 72336 Balingen-Engstlatt (DE)
(72) Erfinder: Eppler, Albert, 72469 Messstetten (DE)
(74) Vertreter: Popp, Eugen, Dr.

(57) **Zusammenfassung**

Die Erfindung betrifft ein Sägewerkzeug, insbesondere eine Kreissäge mit am äußeren Umfang eines Trägerblatts (10) angeordneten Sägezähnen (11). Erfindungsgemäß ist vorgesehen, daß die Sägezahnflanken (13) der Sägezähne (11) einen stumpfen Winkel (β) einschließen.

## Beschreibung

Die Erfindung betrifft ein Sägewerkzeug, insbesondere eine Kreissäge mit am äußeren Umfang eines Trägerblatts angeordneten Sägezähnen. Sägewerkzeuge dieser Art sind in den verschiedensten Ausführungsformen bekannt. Dabei kommt der Form der Sägezähne eine besondere Bedeutung zu. In der Regel sind die Sägezähne durch positive oder negative Spanwinkel, Stabilisierungsfasen an den Schneidkanten, Hauptspan- und Nebenspanflächen, Spanteilerrillen, Spanleitstufen oder dergleichen gekennzeichnet. Die Geometrie eines Sägezahns ist bestimmt durch den Hauptfreiwinkel, Spanwinkel, radialen Freiwinkel, das tangentiale Freimaß, Fasenwinkel, sowie bei Vorhandensein einer Spanleitstufe durch die Tiefe und Länge derselben. Des weiteren ist für das Sägewerkzeug noch von Bedeutung der Sitzwinkel der einzelnen Sägezähne auf dem Sägezahnträger, z. B. Trägerblatt.

Beim Sägen von Kunststoffen, mit Kunststoffen versehenen Hölzern, Nichteisen-Metallen aber auch Metallen gilt es, Schnittflächen mit glatter Oberfläche, d. h. ohne Sägeriefen zu erhalten. Mit Sägezähnen der bekannten Art, wie sie heutzutage insbesondere auch bei Kreissägen zum Einsatz kommen, lassen sich Sägeriefen in mehr oder weniger ausgeprägter Form nicht vermeiden mit der Folge, daß eine Oberflächennachbearbeitung zur Glättung derselben notwendig ist. Meist muß die Oberfläche nachgeschliffen werden.

Der vorliegenden Erfindung liegt daher die Aufgabe Zugrunde, ein Sägewerkzeug, insbesondere eine Kreissäge mit Sägezähnen zu schaffen, die so gestaltet sind, daß eine Oberflächenglättung durch Nachbearbeitung entbehrlich wird.

Diese Aufgabe wird erfindungsgemäß durch die kennzeichnenden Merkmale des Anspruches 1 gelöst, wobei vorteilhafte Weiterbildungen und Details der erfindungsgemäßen Konstruktion in den Unteransprüchen beschrieben sind.

Versuche haben überraschenderweise gezeigt, daß mit der erfindungsgemäßen Lösung praktisch riefenfrei gesägt werden kann. Eine nachträgliche Oberflächenbearbeitung ist nicht mehr erforderlich. Dies gilt insbesondere für die Ausführungsform, bei der die Spitze der stumpfwinkligen Sägezahnflanken abgeflacht ist, und zwar insbesondere unter Berücksichtigung der Abmessungen gemäß den Ansprüchen 5 und 6.

Es sei an dieser Stelle noch darauf hingewiesen, daß die auf einem Werkzeugträger, insbesondere Trägerblatt hintereinander angeordneten Sägezähne mit verschiedenartig konfigurierten Schneidkanten, insbesondere abwechselnd nach links und nach rechts geneigten Schneidkanten versehen sein können. Die Schneidkanten können trapezförmig, dreieckförmig oder bogenförmig ausgebildet sein. Entscheidend für den erfindungsgemäß angestrebten Zweck ist die Ausbildung der Sägezahnflanken, wobei die Übergangskanten zwischen Schneidkante und Sägezahnflanken vorzugsweise jeweils gebrochen sind unter Ausbildung von sogenannten Tangentialfasen. Alternativ kann der Übergang auch fließend ausgebildet sein.

Sägeblätter mit wechselnder Schneidkantenkonfiguration an den Sägezähnen sind besonders vorteilhaft bei der sägenden Bearbeitung von Kunststoffen, wenn es darauf ankommt, an beiden beim Sägevorgang resultierenden Sägeflächen eine Oberfläche ohne/oder mit nur minimal ausgeprägten Sägeriefen zu erreichen, bei gleichzeitiger Minimierung der Eckenausbrüche des Sägeguts.

Die oben erwähnte Ausführungsform mit tangentialer Abflachung der Sägezahnflanken wirkt auf die Sägefläche schabend und polierend ein. Mit dieser Ausführungsform ist eine Nachbearbeitung der Sägefläche auch bei kritischem Sägegut, wie z. B. Kunststoff, absolut entbehrlich.

Nachstehend werden Ausführungsformen eines erfindungsgemäßen Sägewerkzeugs mit erfindungsgemäß ausgebildetem Sägezahn anhand der beigefügten Zeichnungen näher erläutert. Es zeigen
- Fig. 1: eine erste Ausführungsform eines erfindungsgemäß ausgebildeten Sägezahns;
- Fig. 2: eine zweite Ausführungsform des erfindungsgemäß ausgebildeten Sägezahns;
- Fig. 3: eine dritte Ausführungsform des erfindungsgemäß ausgebildeten Sägezahns; und
- Fig. 4: eine vierte Ausführungsform des erfindungsgemäß ausgebildeten Sägezahns.

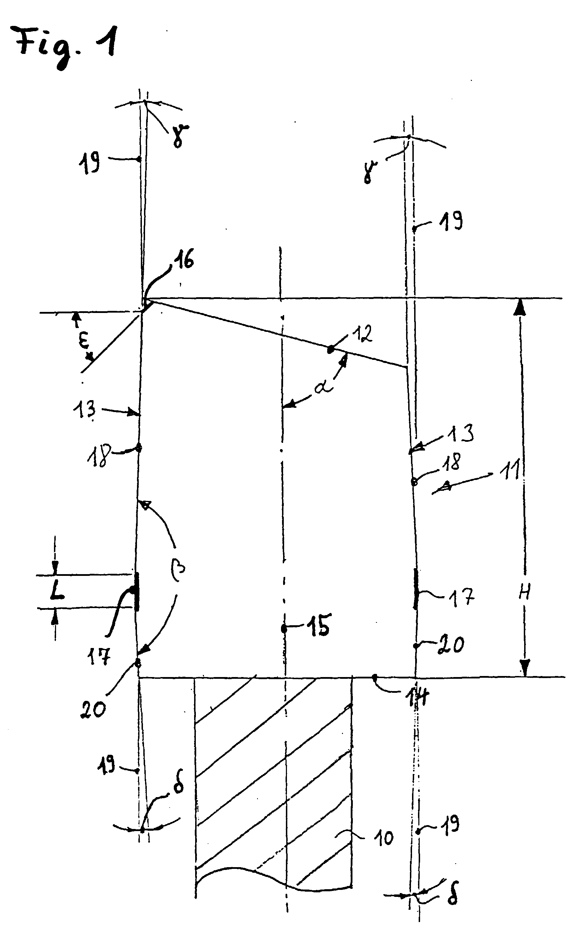

Fig. 1 zeigt eine erste Ausführungsform eines Sägezahns 11 in Brustansicht und stark vergrößertem Maßstab. Der Sägezahn 11 ist auf einem Trägerblatt 10 angeordnet. Die Umrißlinie des Sägezahns 11 ist in Brustansicht radial außen durch eine Schneidkante 12, tangential durch Sägezahnflanken 13 und radial innen durch eine Unterkante 14 gekennzeichnet. Die Unterkante 14 erstreckt sich senkrecht zur Symmetrieebene 15 des Sägezahns. Die Schneidkante 12 ist gegenüber der Symmetrieebene 15 um einen vorbestimmten Winkel α, hier etwa 70 Grad geneigt.

Der Übergang zwischen der Schneidkante 12 und der in der Zeichnung linken Zahnflanke 13 ist durch eine Tangentialfase 16 gekennzeichnet, die eine Breite von etwa 0,1 bis 0,5, insbesondere etwa 0,3 mm aufweisen kann. Der zugeordnete Fasenwinkel ist mit "ε" gekennzeichnet und beträgt bei der dargestellten Ausführungsform 45 Grad.

Die Sägezahnflanken 13 schließen einen stumpfen Winkel β ein, der im Bereich zwischen 170 Grad bis 188 Grad, insbesondere zwischen 184 Grad bis 186 Grad liegt, und beim dargestellten Ausführungsbeispiel 185 Grad beträgt. Die Spitze der stumpfwinkligen Sägezahnflanken 13 ist bei der dargestellten Ausführungsform abgeflacht. Die entsprechende Abflachung ist in der Zeichnung mit der Bezugsziffer 17 gekennzeichnet. Die Abflachungen 17 erstrecken sich parallel zur Symmetrieebene 15 und über eine Länge "L", die etwa 5 bis 15 %, insbesondere etwa 10 % der Zahnhöhe "H" entspricht.

Dementsprechend sind die Zahnflanken 13 jeweils durch drei geradlinige Kanten bzw. ebene Flächen gekennzeichnet. Die der Schneidkante 12 jeweils näher liegenden Abschnitte 18 der Sägezahnflanken 13 schließen einen flacheren Winkel "γ" mit der Tangentialebene 19, die sich parallel zur Symmetrieebene 15 erstreckt, ein als die der Schneidkante 12 entfernter liegenden Abschnitte 20 der Sägezahnflanken 13. Die Abschnitte 18 der Zahnflanken 13 schließen unmittelbar an die Schneidkante 12 an, während die Abschnitte 20 der Zahnflanken 13 an die Unterkante 14 anschließen. Die der Schneidkante 12 entfernter liegenden bzw. an die Unterkante 14 unmittelbar anschließenden Abschnitte 20 der Zahnflanken 13 schließen mit der Tangentialebene jeweils einen Winkel "δ" zwischen 1 Grad bis 5 Grad, insbesondere etwa 3 Grad ein. Der Winkel "γ" liegt im Bereich zwischen 0,5 Grad bis 3 Grad und beträgt vorzugsweise etwa 2 Grad.

Des weiteren läßt die Zeichnung erkennen, daß die der Schneidkante 12 näher liegenden Abschnitte 18 der Sägezahnflanken 13 etwa 2x bis 6x, insbesondere etwa 4x so lang sind wie die der Schneidkante 12 entfernter liegenden Abschnitte 20.

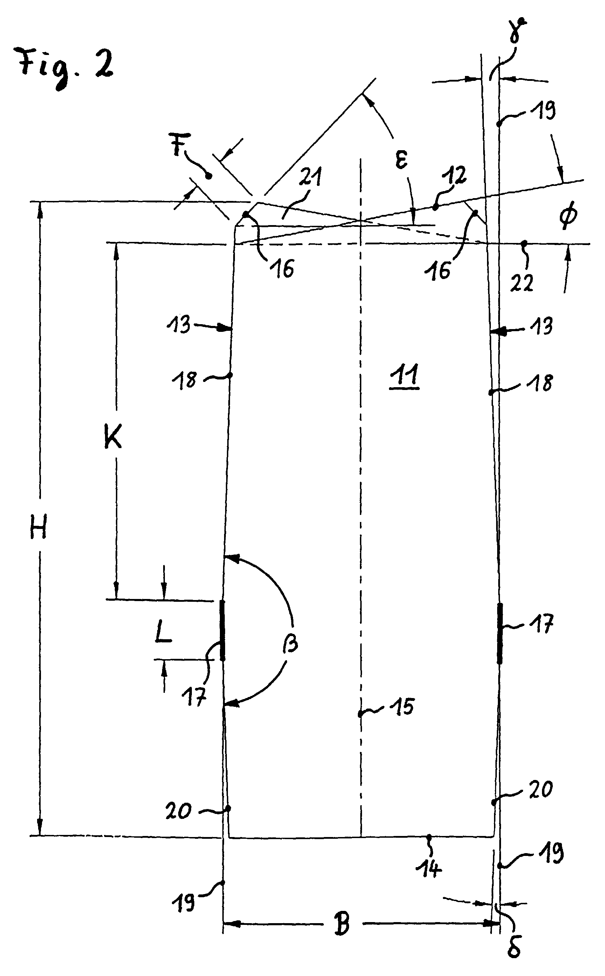

Fig. 2 zeigt eine zweite Ausführungsform des Sägezahns 11 und eines unmittelbar benachbarten weiteren Sägezahns 21 in Brustansicht. Die Darstellung ist stark vergrößert, aber nicht maßstabsgetreu. Die gleichen Bezugszeichen wie in Fig. 1 werden für entsprechende Teile verwendet. Der Sägezahn 11 und der weitere Sägezahn 21 sind bezüglich der Symmetrieebene 15 zueinander antisymmetrisch ausgebildet. Die Umrißlinien des Sägezahns 11 sind in Brustansicht radial außen durch eine Schneidkante 12, tangential durch Sägezahnflanken 13 und radial innen durch eine Unterkante 14 gekennzeichnet. Die Unterkante 14 erstreckt sich senkrecht zur Symmetrieebene 15 des Sägezahns. Die Schneidkante 12 ist gegenüber dem Lot 22 zur Symmetrieebene 15 um einen vorbestimmten Winkel φ, hier etwa 10 Grad geneigt.

Der Übergang zwischen der Schneidkante 12 und einer der beiden Zahnflanken 13 ist durch eine Tangentialfase 16 gekennzeichnet, die eine Breite F von etwa 0,5 bis 1,0 mm aufweisen kann. Der zugeordnete Fasenwinkel ist mit "ε" gekennzeichnet und beträgt bei der zweiten Ausführungsform 45 Grad.

Die Sägezahnflanken 13 schließen einen stumpfen Winkel β ein, der im Bereich zwischen 170 Grad bis 188 Grad, insbesondere zwischen 184 Grad bis 186 Grad liegt, und bei der zweiten Ausführungsform 186 Grad beträgt. Die Spitze der stumpfwinkligen Sägezahnflanken 13 ist bei der dargestellten Ausführungsform abgeflacht. Die entsprechende Abflachung ist in der Zeichnung mit der Bezugsziffer 17 gekennzeichnet. Die Abflachungen 17 erstrecken sich parallel zur Symmetrieebene 15. und über eine Länge "L", die etwa 5 bis 45 %, insbesondere etwa 30 % der Zahnhöhe "H" entspricht. Die Breite "B" des Sägezahns 11 beträgt an der breitesten Stelle etwa 3,2 mm, 4,8 mm oder 5,2 mm. Bei der Breite "B" = 3,2 mm beträgt die Breite F der Tangentialfase 16 vorzugsweise etwa 0,5 mm, während bei den Breiten "B" = 4,8 mm und "B" = 5,2 mm die Breite F der Tangentialfase 16 vorzugsweise etwa 1,0 mm beträgt. Die sich zwischen der Schneidkante 12 und der Unterkante 14 erstreckende Zahnhöhe "H" des Sägezahns 11 beträgt etwa 12,5 mm (10,5 mm bei "B" = 3,2 mm). Die Höhe "K" des Abschnitts 18 beträgt etwa 5,0 mm (3,5 mm bei "B" = 3,2 mm).

Dementsprechend sind die Zahnflanken 13 jeweils durch drei geradlinige Kanten bzw. ebene Flächen gekennzeichnet. Die der Schneidkante 12 jeweils näher liegenden Abschnitte 18 der Sägezahnflanken 13 schließen einen flacheren Winkel "γ" mit der Tangentialebene 19, die sich parallel zur Symmetrieebene 15 erstreckt, ein als die der Schneidkante 12 entfernter liegenden Abschnitte 20 der Sägezahnflanken 13. Die Abschnitte 18 der Zahnflanken 13 schließen unmittelbar an die Schneidkante 12 an, während die Abschnitte 20 der Zahnflanken 13 an die Unterkante 14 anschließen. Die der Schneidkante 12 entfernter liegenden bzw. an die Unterkante 14 unmittelbar anschließenden Abschnitte 20 der Zahnflanken 13 schließen mit der Tangentialebene jeweils einen Winkel "δ" zwischen 1 Grad bis 5 Grad, insbesondere etwa 2 Grad ein. Der Winkel "γ" liegt im Bereich zwischen 0,5 Grad bis 3 Grad und beträgt vorzugsweise etwa 2 Grad.

Die der Schneidkante 12 näher liegenden Abschnitte 18 der Sägezahnflanken 13 sind etwa 2x bis 6x, insbesondere etwa 2x so lang wie die der Schneidkante 12 entfernter liegenden Abschnitte 20.

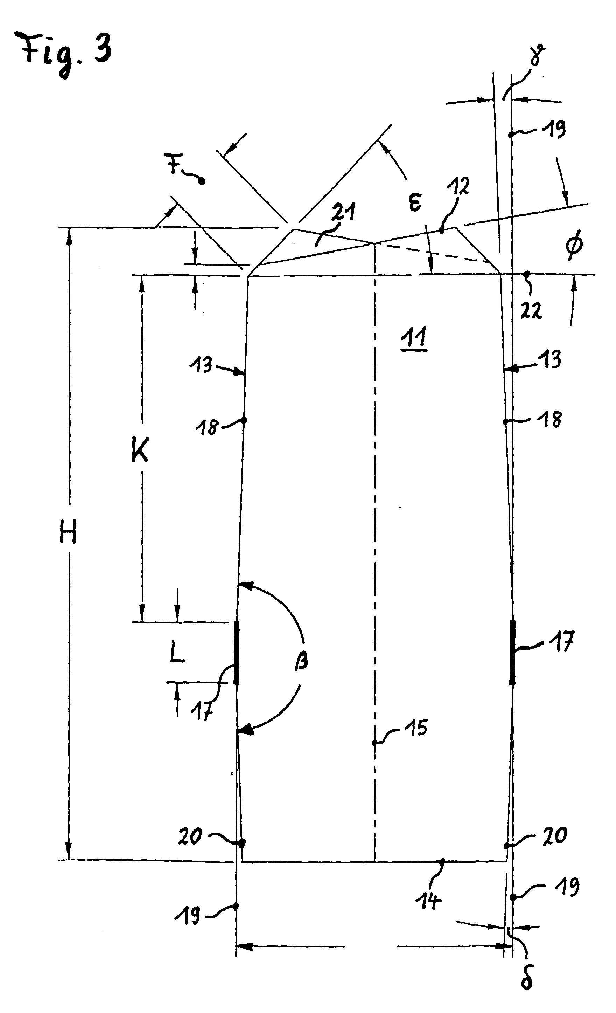

Fig. 3 zeigt eine dritte Ausführungsform des Sägezahns 11 und des unmittelbar benachbarten weiteren Sägezahns 21 in Brustansicht. Die Darstellung ist stark vergrößert, aber nicht maßstabsgetreu. Die gleichen Bezugszeichen wie in Fig. 1 und Fig. 2 werden für entsprechende Teile verwendet. Der Sägezahn 11 und der weitere Sägezahn 21 sind bezüglich der Symmtrieebene 15 zueinander antisymmetrisch ausgebildet. Die Umrißlinie des Sägezahns 11 ist in Brustansicht radial außen durch eine Schneidkante 12, tangential durch Sägezahnflanken 13 und radial innen durch eine Unterkante 14 gekennzeichnet. Die Unterkante 14 erstreckt sich senkrecht zur Symmetrieebene 15 des Sägezahns 11. Die Schneidkante 12 ist gegenüber dem Lot 22 zur Symmetrieebene 15 um einen vorbestimmten Winkel φ, hier etwa 10 Grad geneigt.

Der Übergang zwischen der Schneidkante 12 und der in der Zeichnung linken Zahnflanke 13 ist durch eine Tangentialfase 16 gekennzeichnet, die eine Breite F von etwa 0,5 bis 2,0, insbesondere etwa 1,0 mm aufweisen kann. Der zugeordnete Fasenwinkel ist mit "ε" gekennzeichnet und beträgt bei der dargestellten Ausführungsform 45 Grad.

Die Sägezahnflanken 13 schließen einen stumpfen Winkel β ein, der im Bereich zwischen 170 Grad bis 188 Grad, insbesondere zwischen 184 Grad bis 186 Grad liegt, und bei der dritten Ausführungsform 186 Grad beträgt. Die Spitze der stumpfwinkligen Sägezahnflanken 13 ist bei der dargestellten Ausführungsform abgeflacht. Die entsprechende Abflachung ist in der Zeichnung mit der Bezugsziffer 17 gekennzeichnet. Die Abflachungen 17 erstrecken sich parallel zur Symmetrieebene 15 und über eine Länge "L", die etwa 5 bis 45 %, insbesondere etwa 30 % der Zahnhöhe "H" entspricht. Die sich zwischen der Schneidkante 12 und der Unterkante 14 erstreckende Zahnhöhe "H" des Sägezahns 11 beträgt etwa 10,5 mm. Die Höhe "K" des Abschnitts 18 beträgt etwa 4,5 mm. Die Breite "B" des Sägezahns 11 beträgt an der breitesten Stelle etwa 3,2 mm.

Dementsprechend sind die Zahnflanken 13 jeweils durch drei geradlinige Kanten bzw. ebene Flächen gekennzeichnet. Die der Schneidkante 12 jeweils näher liegenden Abschnitte 18 der Sägezahnflanken 13 schließen einen flacheren Winkel "γ" mit der Tangentialebene 19, die sich parallel zur Symmetrieebene 15 erstreckt, ein als die der Schneidkante 12 entfernter liegenden Abschnitte 20 der Sägezahnflanken 13. Die Abschnitte 18 der Zahnflanken 13 schließen unmittelbar an die Schneidkante 12 an, während die Abschnitte 20 der Zahnflanken 13 an die Unterkante 14 anschließen. Die der Schneidkante 12 entfernter liegenden bzw. an die Unterkante 14 unmittelbar anschließenden Abschnitte 20 der Zahnflanken 13 schließen mit der Tangentialebene jeweils einen Winkel "δ" zwischen 1 Grad bis 5 Grad, insbesondere etwa 2 Grad ein. Der Winkel "γ" liegt im Bereich zwischen 0,5 Grad bis 3 Grad und beträgt vorzugsweise etwa 2 Grad.

Die der Schneidkante 12 näher liegenden Abschnitte 18 der Sägezahnflanken 13 sind etwa 2x bis 6x, insbesondere etwa 2x so lang wie die der Schneidkante 12 entfernter liegenden Abschnitte 20.

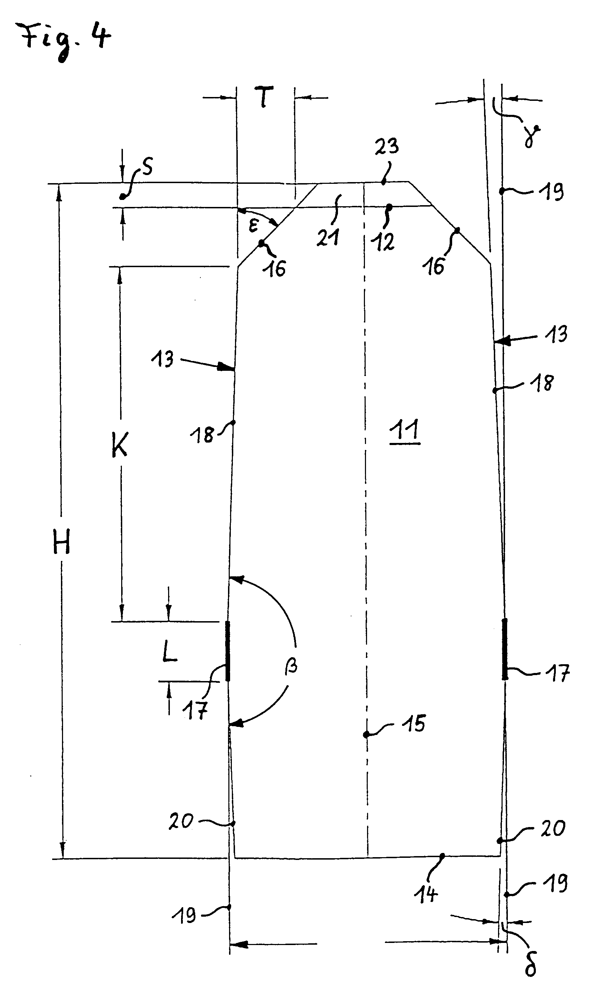

Fig. 4 zeigt eine vierte Ausführungsform des Sägezahns 11 und des unmittelbar benachbarten weiteren Sägezahns 21 in Brustansicht. Die Darstellung ist stark vergrößert, aber nicht maßstabsgetreu. Die gleichen Bezugszeichen wie in Fig. 1 bis Fig. 3 werden für entsprechende Teile verwendet. Der Sägezahn 11 und der weitere Sägezahn 21 sind jeweils symmetrisch bezüglich der Symmetrieebene 15 und trapezförmig ausgebildet. Die Umrißlinien des Sägezahns 11 sind jeweils in Brustansicht radial außen durch eine Schneidkante 12, tangential durch Sägezahnflanken 13 und radial innen durch eine Unterkante 14 gekennzeichnet. Die Umrißlinien des weiteren Sägezahns 21 sind jeweils in Brustansicht radial außen durch eine Schneidkante 23, tangential durch die Sägezahnflanken 13 und radial innen durch die Unterkante 14 gekennzeichnet. Die Unterkante 14 erstreckt sich senkrecht zur Symmetrieebene 15 des Sägezahns 11. Die Schneidkanten 12 und 23 erstrecken sich senkrecht zur Symmetrieebene 15, wobei die Schneidkante 23 des weiteren Sägezahns 21 um einen Abstand "S" von etwa 0,4 mm höher liegt als die Schneidkante 12 des Sägezahns 11.

Die Übergänge zwischen den Schneidkanten 12 bzw. 23 und den linken bzw. rechten Zahnflanken 13 sind durch jeweils eine Tangentialfase 16 gekennzeichnet, die eine Tiefe "T" von etwa 1,0 mm beim Sägezahn 11 und eine Tiefe "T" von etwa 1,4 mm beim Sägezahn 21 aufweisen können. Der zugeordnete Fasenwinkel ist mit "ε" gekennzeichnet und beträgt bei der vierten Ausführungsform 45 Grad, sowohl beim Sägezahn 11 als auch beim Sägezahn 21. Der Sägezahn 11 und der weitere Sägezahn 21 unterscheiden sich nur durch unterschiedlich hoch angeordnete Schneidkanten 12 und 23 sowie durch unterschiedliche Tiefen "T" der Tangentialfasen 16.

Die Sägezahnflanken 13 schließen einen stumpfen Winkel β ein, der im Bereich zwischen 170 Grad bis 188 Grad, insbesondere zwischen 184 Grad bis 186 Grad liegt, und bei der vierten Ausführungsform 186 Grad beträgt. Die Spitze der stumpfwinkligen Sägezahnflanken 13 ist bei der vierten Ausführungsform abgeflacht. Die entsprechende Abflachung ist in der Zeichnung mit der Bezugsziffer 17 gekennzeichnet. Die Abflachungen 17 erstrecken sich parallel zur Symmetrieebene 15 und über eine Länge "L", die etwa 5 bis 45 %, insbesondere etwa 30 % der Zahnhöhe "H" entspricht. Die sich zwischen der Schneidkante 12 und der Unterkante 14 erstreckende Zahnhöhe "H" des Sägezahns 11 beträgt etwa 12,5 mm. Die Höhe "K" des Abschnitts 18 beträgt etwa 5,0 mm. Die Breite "B" des Sägezahns 11 beträgt an der breitesten Stelle etwa 4,8 mm oder 5,8 mm.

Dementsprechend sind die Zahnflanken 13 jeweils durch drei geradlinige Kanten bzw. ebene Flächen gekennzeichnet. Die der Schneidkante 12 jeweils näher liegenden Abschnitte 18 der Sägezahnflanken 13 schließen einen flacheren Winkel "γ" mit der Tangentialebene 19, die sich parallel zur Symmetrieebene 15 erstreckt, ein als die der Schneidkante 12 entfernter liegenden Abschnitte 20 der Sägezahnflanken 13. Die Abschnitte 18 der Zahnflanken 13 schließen unmittelbar an die Schneidkante 12 an, während die Abschnitte 20 der Zahnflanken 13 an die Unterkante 14 anschließen. Die der Schneidkante 12 entfernter liegenden bzw. an die Unterkante 14 unmittelbar anschließenden Abschnitte 20 der Zahnflanken 13 schließen mit der Tangentialebene jeweils einen Winkel "δ" zwischen 1 Grad bis 5 Grad, insbesondere etwa 2 Grad ein. Der Winkel "γ" liegt im Bereich zwischen 0,5 Grad bis 3 Grad und beträgt vorzugsweise etwa 2 Grad.

Die den Schneidkante 12 und 23 näher liegenden Abschnitte 18 der Sägezahnflanken 13 sind etwa 2x bis 6x, insbesondere etwa 2x so lang wie die den Schneidkanten 12 und 23 entfernter liegenden Abschnitte 20.

Es sei an dieser Stelle nochmals darauf hingewiesen, daß es sich bei den Abschnitten 18 und 20 um die Winkelabschnitte der Zahnflanken 13 handelt, d. h. um diejenigen Abschnitte, die mit den Tangentialebenen bzw. der Symmetrieebene 15 einen Winkel einschließen. Zwischen den Abschnitten 18 und 20 der beiden Zahnflanken 13 liegt die Abflachung 17, die sich parallel zu den Tangentialebenen 19 bzw. der Symmetriebene 15 erstrecken. Diese Abflachungen 17 bewirken den eingangs erwähnten Schäl- und Poliereffekt.

Grundsätzlich ist es denkbar, daß die Abschnitte 18, 20 geringfügig konvex gebogen sind. Entscheidend für die Oberflächenqualität der Schnittfläche sind die Abflachungen 17, die abhängig vom Sägegut ebenfalls geringfügig bogenförmig ausgebildet sein können, jedoch stets in Annäherung an eine gerade Linie parallel zu den Tangentialebenen bzw. zur Symmetrieebene.

Grundsätzlich ist es auch denkbar, die Zahnflankenabschnitte 18 und 20 links und rechts jeweils unterschiedlich lang auszubilden mit der Folge, daß dann auch die Abflachungen 17 links und rechts eine unterschiedliche Radiallage besitzen.

Auch ist es denkbar, die Winkel "γ*"* und/oder *"*δ*"* links und rechts unterschiedlich groß auszubilden. Durch diese Maßnahmen wird das beschriebene Grundkonzept nicht verlassen.

Sämtliche in den Anmeldungsunterlagen offenbarten Merkmale werden als erfindungswesentlich offenbart, soweit sie einzeln oder in Kombination gegenüber dem Stand der Technik neu sind.

## Patentansprüche

1. Sägewerkzeug, insbesondere Kreissäge mit am äußeren Umfang eines Trägerblatts (10) angeordneten Sägezähnen (11),
**dadurch gekennzeichnet,** daß
die Sägezahnflanken (13) der Sägezähne (11) einen stumpfen Winkel (β) einschließen.

2. Sägewerkzeug nach Anspruch 1,
**dadurch gekennzeichnet,** daß
die Spitze der stumpfwinkligen Sägezahnflanken (13) geringfügig abgerundet oder abgeflacht ist.

3. Sägewerkzeug nach Anspruch 1 oder 2,
**dadurch gekennzeichnet,** daß
der Winkel (β), den die diesen definierenden Abschnitte (18, 20) der Sägezahnflanken (13) einschließen, im Bereich zwischen 170 Grad bis 188 Grad, insbesondere zwischen 184 Grad bis 186 Grad, liegt.

4. Sägewerkzeug nach einem der Ansprüche 1 bis 3,
**dadurch gekennzeichnet,** daß
die der Schneidkante (12) jeweils näher liegenden Abschnitte (18) der Sägeflanken (13) jeweils einen flacheren Winkel (γ) mit der zugeordneten Tangentialebene (19) einschließen als die der Schneidkante (12) entfernter liegenden Flankenabschnitte (20).

5. Sägewerkzeug nach einem der Ansprüche 2 bis 4,
**dadurch gekennzeichnet,** daß
die Abflachung (17) der Spitze der stumpfwinkligen Sägezahnflanken (13) sich in Tangentialebene (19) über eine Länge (L) erstreckt, die etwa 5 % bis 45 %, insbesondere etwa 30 % der Zahnhöhe (H) entspricht.

6. Sägewerkzeug nach einem der Ansprüche 2 bis 4,
**dadurch gekennzeichnet,** daß
die Abflachung (17) der Spitze der stumpfwinkligen Sägezahnflanken (13) sich in Tangentialebene (19) über eine Länge (L) erstreckt, die etwa 5 % bis 15 %, insbesondere etwa 10 % der Zahnhöhe (H) entspricht.

7. Sägewerkzeug nach einem der Ansprüche 1 bis 6,
**dadurch gekennzeichnet,** daß
die der Schneidkante (12) näher liegenden Abschnitte (18) der Sägezahnflanken (13) jeweils etwa 2x bis 6x, insbesondere etwa 4x so lang sind wie die der Schneidkante (12) entfernter liegenden Flankenabschnitte (20).
